# EUROPÄISCHE PATENTSCHRIFT

(11) **EP 1 605 720 B1**
(45) Veröffentlichungstag und Bekanntmachung des Hinweises auf die Patenterteilung: **12.01.2011**
(21) Anmeldenummer: 05019838.1
(22) Anmeldetag: 09.11.2000
(51) Int. Cl.: H04W 72/08

(54) **Verfahren zur Zuweisung von Übertragungskanälen in einem Telekommunikationsnetz und Teilnehmerstation**
Method for allocating transmission channels in a telecommunications network and subscriber station
Procédé d'affectation de canaux de transmission d'un réseau de télécommunication et poste de réséau

(30) Priorität: 01.12.1999 DE 19957740; 25.02.2000 DE 10008838
(43) Veröffentlichungstag der Anmeldung: 14.12.2005
(62) Teilanmeldung aus: 00987097.3
(73) Patentinhaber: IPCom GmbH & Co. KG, 82049 Pullach (DE)
(72) Erfinder: Laumen, Josef, 31141 Hildesheim (DE); Schmidt, Gunnar, 38302 Wolfenbuettel (DE); Hans, Martin, 31162 Bad Salzdefurth (DE); Kowalewski, Frank, 38228 Salzgitter (DE); Lechner, Detlef, 12101 Berlin-Tempelhof (DE); Baer, Siegfried, 75179 Pforzheim (DE); Beckmann, Mark, 38124 Braunschweig (DE)
(74) Vertreter: Gigerich, Jan

(56) Entgegenhaltungen:
- EP-A- 0 865 172

## Beschreibung

### Stand der Technik

Die Erfindung geht von einem Verfahren zur Erweiterung der Übertragungskapazität in einem Telekommunikationsnetz und von einer Teilnehmerstation nach der Gattung der unabhängigen Ansprüche aus.

Aus der BP 0 865 172 A2 ist ein Verfahren und ein Gerät zum Betrieb in einem Indoor-CDMR-Telekommunikationssystem bekannt, wobei zwei oder mehr drahtlose Kommunikationssysteme überlagert betrieben werden. Einen der beiden Systeme ist ein Indoor-System und das andere ist ein Outdoor-System. Das Indoor-System überwacht den Betrieb des Outdoor-Systeme und detektiert, welcher Teil der verfügbaren Funkressourcen zeitweise nicht benutzt oder interferenzfrei sind im Outdoor-System. Das Indoor-System wählt dynamisch einen nicht benutzten outdoor-Kanal für den Indoor-Betrieb aus. Der Indoor-Funkverkehr ist in TDD-Zeitschlitze aufgeteilt, die die Zeitschlitze für die Überwachung der bestehenden Funkverbindung auf anderen Outdoor-Kanälen umfassen, so dass schnelle Änderungen gemäß sich änderndem Verkehr und sich ändernden Interferenzbedingungen möglich sind. Bei der Auswahl der Kanäle wird ein Schwellenwertvergleich vorgenommen.

In Mobilfunksystemen der dritten Generation, beispielsweise nach dem UMTS-Standard (Universal Mobile Telecommunication System) oder dergleichen, sind für die Übertragung von Signalen über eine Luftschnittstelle zwischen einer Basisstation und einer Mobilstation zwei Konzepte oder Modi in Abhängigkeit der verwendeten Übertragungsressource vorgesehen. Sind als Übertragungsressource verschiedene Frequenzbänder vorgesehen, so handelt es sich um einen FDD-Modus (Frequency Division Duplex), in dem für die Uplink-Übertragungsrichtung von der Mobilstation zur Basisstation und für die Downlink-Übertragungsrichtung von der Basisstation zur Mobilstation zwei unterschiedliche Frequenzbänder zur Übertragung der Signale verwendet werden. Werden als Übertragungsressource Zeitschlitze gewählt, so handelt es sich um den TDD-Modus (Time Division Duplex), bei dem für die Uplink-Übertragungsrichtung und die Downlink-Übertragungsrichtung bei Verwendung des gleichen Frequenzbandes unterschiedliche Zeitschlitze verwendet werden. Eine weitere Kanaltrennung ist dabei für beide Modi durch Verwendung eines CDMA-Verfahrens (Code Division Multiple Access) möglich. Die Übertragungskanäle für Verbindungen zwischen einer oder mehreren Basisstationen und verschiedenen Mobilstationen können durch unterschiedliche Codes voneinander getrennt sein, bei Benutzung der gleichen Übertragungsressource, beispielsweise des gleichen Zeitschlitzes und/oder der gleichen Frequenzlage. In beiden Modi erfolgt dabei die Codezuweisung für die einzurichtenden Übertragungskanäle koordiniert vom Mobilfunknetz, damit kein Code mehrfach verwendet wird.

In einem unkoordinierten Betrieb sind die Basisstationen jedoch nicht über ein übergeordnetes System verbunden, so daß eine koordinierte Codezuweisung nicht möglich ist. Ein solcher Betrieb ist beispielsweise für den Heimbereich bei schnurlosen Telefonen sinnvoll, wo unter Umständen viele individuelle Basisstationen unabhängig voneinander betrieben werden. Hier kann die Codezuweisung nicht mehr koordiniert erfolgen. Pro Übertragungsressource, also beispielsweise pro Zeitschlitz oder pro Frequenzband, kann somit nur eine einzelne Basisstation aktiv sein, dafür jedoch eventuell auch mit mehreren verschiedenen Codes. Für eine benachbarte Basisstation ist diese Übertragungsressource belegt, da ihr die dort verwendeten Codes nicht bekannt sind. Die Belegung der Übertragungsressource kann dabei von der benachbarten Basisstation durch eine Leistungsmessung detektiert werden. Die benachbarte Basisstation kann dann entsprechend auf andere Übertragungsressourcen, also beispielsweise andere Zeitschlitze oder Frequenzbänder ausweichen.

### Vorteile der Erfindung

Das erfindungsgemäße Verfahren zur Zuweisung von Übertragungskanälen in einem Telekommunikationsnetz und die erfindungsgemäße Teilnehmerstation mit den Merkmalen der unabhängigen Ansprüche haben demgegenüber den Vorteil, daß in einem unkoordinierten Betrieb der Basisstationen mindestens einer der Übertragungskanäle der Übertragung von Signalen zwischen einer der Basisstationen und einer der Mobilstationen in Abhängigkeit einer Kanalmessung, bei der die Übertragungsleistung auf allen möglichen Übertragungskanälen gemessen wird, dann zugewiesen wird, wenn die zuvor gemessene Übertragungsleistung auf diesem Übertragungskanal minimal ist. Auf diese Weise wird die Möglichkeit geschaffen, die vorhandenen Übertragungskanäle optimal auf die für die Übertragung von Signalen zwischen den Basisstationen und den Mobilstationen einzurichtenden oder eingerichteten Verbindungen zu verteilen, so daß die Kapazität des Telekommunikationsnetzes und damit die Anzahl der gleichzeitig einzurichtenden Verbindungen im Telekommunikationsnetz erhöht, ja sogar maximiert werden kann. Ein und derselbe Übertragungskanal könnte sogar gleichzeitig von verschiedenen Basisstationen genutzt werden, wenn sie sich aufgrund begrenzter Reichweite gegenseitig nur unwesentlich oder gar nicht beeinflussen.

Durch die in den Unteransprüchen aufgeführten Maßnahmen sind vorteilhafte Weiterbildungen und Verbesserungen des Verfahrens zur Zuweisung von Übertragungskanälen in einem Telekommunikationsnetz und der Teilnehmerstation gemäß den unabhängigen Ansprüchen möglich.

Besonders vorteilhaft ist es, daß Codes vorgesehen sind, durch die mindestens eine Übertragungsressource, insbesondere ein Zeitschlitz oder ein Frequenzband, mit mehrere der Übertragungskanäle zur Übertragung von Signalen zwischen den Basisstationen und den Mobilstationen gespreizt wird und daß die Kanalmessung eine Codemessung umfaßt, bei der ein empfangenes Signal für jede Übertragungsressource mit jedem zugelassenen Code entspreizt wird, um die Übertragungsleistung in jedem der Übertragungskanäle zu messen. Auf diese Weise wird die Möglichkeit geschaffen, daß eine Übertragungsressource, beispielsweise ein Zeitschlitz oder ein Frequenzband gleichzeitig von unterschiedlichen Basisstationen gemeinsam genutzt werden kann. Eine Übertragungsressource, beispielsweise ein Zeitschlitz oder ein Frequenzband, können auf diese Weise gleichzeitig gemeinsam von mehreren Übertragungskanälen genutzt werden. Durch diese Aufteilung der Übertragungsressourcen wird die Kapazität des Telekommunikationsnetzes und damit die Anzahl der gleichzeitig einzurichtenden Verbindungen im Telekommunikationsnetz ebenfalls erhöht.

Vorteilhaft ist dabei, daß die Kanalmessung für die Zuweisung mindestens eines der Übertragungskanäle zwischen einer der Basisstationen und einer der Mobilstationen bei einem Verbindungsaufbau durchgeführt wird. Auf diese Weise wird die Kapazität des Telekommunikationsnetzes für jede einzurichtende Verbindung zum frühestmöglichen Zeitpunkt genutzt.

Besonders vorteilhaft ist es, daß die Kanalmessung für die Zuweisung mindestens eines der Übertragungskanäle während einer bestehenden Verbindung zwischen einer der Basisstationen und einer der Mobilstationen durchgeführt wird, daß parallel die Verbindungsqualität der bestehenden Verbindung gemessen wird und daß bei Unterschreiten eines vorgegebenen Wertes für die Verbindungsqualität ein Kanalwechsel durchgeführt wird und mindestens ein neuer Übertragungskanal in Abhängigkeit der Kanalmessung der bestehenden Verbindung zugewiesen wird. Auf diese Weise kann eine dynamische Kanalzuweisung für eine oder mehrere bestehende Verbindungen realisiert werden, so daß sämtliche einer bestehenden Verbindung gerade zugewiesenen Übertragungskanäle eine möglichst hohe Verbindungsqualität aufweisen.

Vorteilhaft ist außerdem, daß für mindestens eine der Basisstationen spezifische Informationen über einen Broadcast-Kanal an alle im Empfangsbereich dieser mindestens einen Basisstation liegenden Mobilstationen übertragen werden und daß der Broadcast-Kanal gewechselt wird, wenn die auf ihm detektierten Störungen einen vorgegebenen Wert überschreiten. Auf diese Weise ist eine dynamische Zuweisung des Broadcast-Kanals zu mindestens einer der Basisstationen möglich, wobei der gerade verwendete Broadcast-Kanal möglichst wenig Störungen aufweist.

Ein weiterer Vorteil besteht darin, daß mindestens einer der Übertragungskanäle für die Verwendung als Broadcast-Kanal reserviert wird. Auf diese Weise wird der Aufwand und die Zeit für die Mobilstationen zum Auffinden des Broadcast-Kanals reduziert, da sie den Broadcast-Kanal aus einer bereits vorgegebenen oder vorselektierten Menge von Übertragungskanälen ausfindig machen können.

Besonders vorteilhaft ist es, daß für den Fall, in dem die Übertragungskapazität der für die Zuweisung bislang ermittelten Übertragungskanäle nicht ausreicht, mindestens ein mit einem neuen Scrambling-Code verwürfelter Übertragungskanal der Übertragung von Signalen zwischen einer der Basisstationen und einer der Mobilstationen in Abhängigkeit einer Kanalmessung, bei der die Übertragungsleistung auf allen möglichen Übertragungskanälen nach Verwürfelung mit einem Scrambling-Code gemessen wird, dann zugewiesen wird, wenn die gemessene Übertragungsleistung auf diesem verwürfelten Übertragungskanal minimal ist. Auf diese Weise werden Situationen vermieden, bei denen eine Basisstation im unkoordinierten Betrieb keine freien Übertragungskanäle mehr findet, weil beispielsweise eine oder mehrere andere Basisstationen sämtliche Übertragungskanäle schon belegen. Vielmehr läßt sich die Anzahl der Übertragungskanäle und damit die Datenrate durch die Verwendung von Scrambling-Codes noch erhöhen.

### Zeichnung

Ausführungsbeispiele der Erfindung sind in der Zeichnung dargestellt und in der nachfolgenden Beschreibung näher erläutert. Es zeigen Figur 1 ein Blockschaltbild einer erfindungsgemäßen Teilnehmerstation, Figur 2 ein Code-Zeitschlitz-Diagramm, Figur 3 eine erste Anordnung von Basis- und Mobilstationen in einem Mobilfunknetz und Figur 4 eine zweite Anordnung von Basis- und Mobilstationen in einem Mobilfunknetz.

### Beschreibung der Ausführungsbeispiele

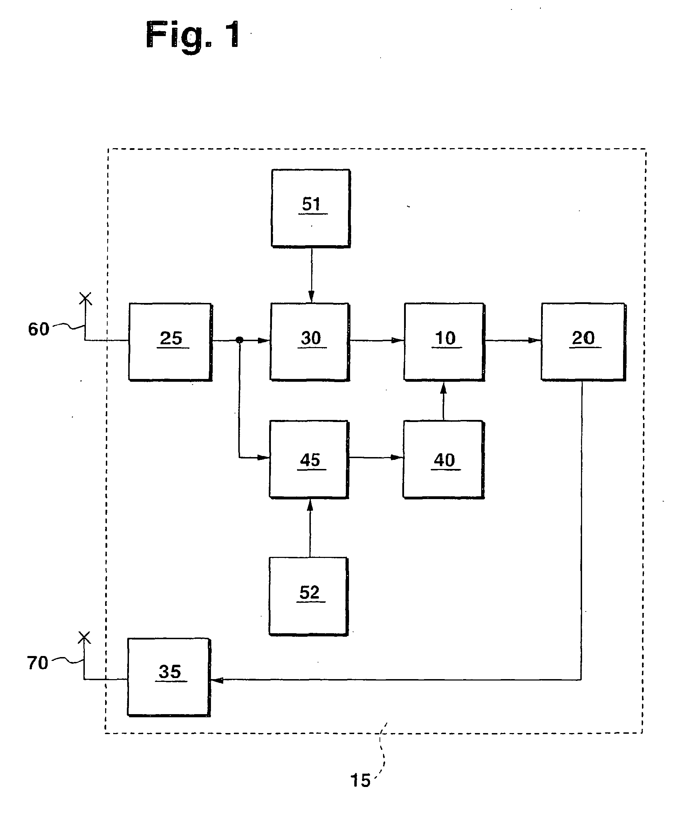

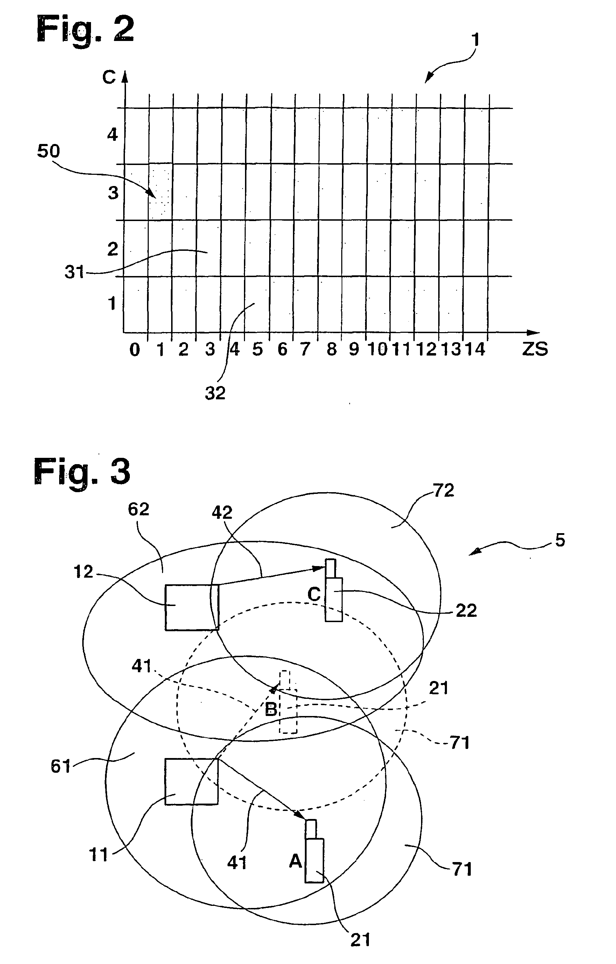

In Figur 1 kennzeichnet 15 eine Teilnehmerstation eines Telekommunikationsnetzes 5. Das Telekommunikationsnetz 5 kann dabei beispielsweise als Festnetz oder als Mobilfunknetz ausgebildet sein. Ist das Telekommunikationsnetz 5 als Mobilfunknetz ausgebildet, so kann es sich bei der Teilnehmerstation 15 um eine Basisstation 11, 12 oder um eine Mobilstation 21, 22 des Telekommunikationsnetzes 5 gemäß Figur 3 handeln. Im folgenden soll beispielhaft angenommen werden, daß das Telekommunikationsnetz 5 als Mobilfunknetz und die Teilnehmerstation 15 als Basisstation 11, 12 oder als Mobilstation 21, 22 ausgebildet sind. Das Mobilfunksystem 5 und die Teilnehmerstation 15 können dabei beispielsweise nach dem GSM-Standard (Global System for Mobile Communications), nach dem UMTS-Standard (Universal Mobile Telecommunication System) oder dergleichen ausgebildet sein.

Die in Figur 1 dargestellte Teilnehmerstation 15 umfaßt eine Empfangsvorrichtung 25, an die eine Empfangsantenne 60 angeschlossen ist. Die Teilnehmerstation 15 umfaßt gemäß Figur 1 außerdem eine Sendevorrichtung 35, an die eine Sendeantenne 70 angeschlossen ist. Die Empfangsantenne 60 und die Sendeantenne 70 können auch beispielsweise durch Verwendung einer Antennenweiche zu einer kombinierten Sende-/Empfangsantenne zusammengefaßt sein. Die Empfangsvorrichtung 25 ist ausgangsseitig einerseits mit einem Eingang von Mitteln 30 zur Codemessung und andererseits mit einem Eingang einer Entspreizvorrichtung 45 verbunden. Den Mitteln 30 zur Codemessung sind außerdem Codes eines ersten Codespeichers 51 zugeführt. Der Entspreizvorrichtung 45 ist außerdem mindestens ein Code eines zweiten Codespeichers 52 zugeführt. Die Mittel 30 zur Codemessung sind ausgangsseitig mit einem Eingang von Mitteln 10 zur Kanalmessung verbunden. Die Entspreizvorrichtung 45 ist ausgangsseitig mit einem Eingang von Mitteln 40 zur Messung der Verbindungsqualität verbunden. Ein Ausgang der Mittel 40 zur Messung der Verbindungsqualität ist außerdem ebenfalls den Mitteln 10 zur Kanalmessung zugeführt. Die Mittel 10 zur Kanalmessung sind ausgangsseitig mit einem Eingang von Mitteln 20 zur Kanalzuweisung verbunden, deren Ausgang der Sendevorrichtung 35 zugeführt ist.

Im folgenden soll angenommen werden, daß sowohl eine erste Basisstation 11 als auch eine zweite Basisstation 12 im Mobilfunknetz 5 gemäß Figur 3 den Aufbau der Teilnehmerstation 15 gemäß Figur 1 aufweist. Genauso soll weiterhin angenommen werden, daß sowohl die erste Mobilstation 21 als auch die zweite Mobilstation 22 den Aufbau der Teilnehmerstation 15 gemäß Figur 1 aufweist. Gemäß Figur 3 spannt die erste Basisstation 11 eine erste Funkzelle 61 auf, in der sie Mobilstationen mit Funksignalen erreichen kann. Die zweite Basisstation 12 spannt eine zweite Funkzelle 62 auf, in der sie Mobilstationen mit ihren Funksignalen erreichen kann. In der ersten Funkzelle 61 ist die erste Mobilstation 21 angeordnet, wohingegen in der zweiten Funkzelle 62 die zweite Mobilstation 22 angeordnet ist. Zwischen der ersten Basisstation 11 und der ersten Mobilstation 21 soll eine erste Verbindung 41 aufgebaut werden, wohingegen zwischen der zweiten Basisstation 12 und der zweiten Mobilstation 22 eine zweite Verbindung 42 aufgebaut werden soll.

Für die erste Verbindung 41 und für die zweite Verbindung 42 können zwei verschiedene Konzepte oder Modi vorgesehen sein. Dabei handelt es sich zum einen um den FDD-Modus (Frequency Division Duplex), bei dem für die Uplink-Übertragungsrichtung von der jeweiligen Mobilstation 21, 22 zur zugeordneten Basisstation 11, 12 zwei unterschiedliche Frequenzbänder als Übertragungsressource Verwendung finden. Zum anderen handelt es sich dabei um den TDD-Modus (Time Division Duplex), bei dem für die Uplink-Übertragungsrichtung und die Downlink-Übertragungsrichtung im gleichen Frequenzband unterschiedliche Zeitschlitze als Übertragungsressource verwendet werden. In beiden Modi können die jeweils verwendeten Übertragungsressourcen durch Verwendung von Codes C in jeweils mehrere Übertragungskanäle gespreizt werden. Die Verwendung solcher Codes basiert dabei beispielsweise auf den Prinzipien eines sogenannten CDMA-Verfahrens (Code Division Multiple Access) zur weiteren Kanaltrennung. Dabei kann ein Frequenzband oder ein Zeitschlitz durch Verwendung unterschiedlicher Codes in jeweils mehrere Übertragungskanäle gespreizt werden. Eine solche Übertragungsressource, wie beispielsweise ein Zeitschlitz oder ein Frequenzband können bei Verwendung unterschiedlicher Codes gleichzeitig von verschiedenen Verbindungen und/oder in Uplink- oder in Downlink-Übertragungsrichtung ein und derselben Verbindung genutzt werden, so daß eine Erhöhung der Kapazität des Mobilfunknetzes 5 bzw. der im Mobilfunknetz 5 einrichtbaren Verbindungen durch Erhöhung der Zahl der verwendbaren Übertragungskanäle erzielt wird. Anhand von Figur 2 ist am Beispiel von als Zeitschlitz ZS ausgebildeten Übertragungsressourcen eine Aufspreizung in mehrere Übertragungskanäle durch Verwendung unterschiedlicher Codes C dargestellt. Dabei soll angenommen werden, daß pro Übertragungsrahmen fünfzehn Zeitschlitze vorgesehen sind, die gemäß Figur 2 von 0 bis 14 durchnumeriert auf der Abszisse vorgesehen sind. Auf der Ordinate sind dann vier verschiedene Codes C von 1 bis 4 aufgetragen, so daß jeder Zeitschlitz ZS mit dem gleichen Spreizfaktor 4 in vier verschiedene Übertragungskanäle gespreizt wird, die sich durch unterschiedliche Codierung voneinander unterscheiden. Die auf diese Weise entstehenden Übertragungskanäle können in dem Code-Zeitschlitz-Diagramm gemäß Figur 2 als Rasterelemente dargestellt werden und sind mit dem Bezugszeichen 1 pauschal gekennzeichnet.

Im folgenden sollen beispielhaft als Übertragungsressource Zeitschlitze für die Übertragung von Signalen im Mobilfunknetz 5 verwendet werden. Die Basisstationen 11, 12 sollen unkoordiniert betrieben und nicht über ein übergeordnetes System verbunden sein, so daß eine koordinierte Codezuweisung nicht möglich ist. Ein solcher unkoordinierter Betrieb ist beispielsweise auch für den Heimbereich bei Verwendung von als schnurlose Telefone ausgebildeten Mobilstationen 21, 22 sinnvoll, da in diesem Fall unter Umständen viele individuelle Basisstationen unabhängig voneinander und damit unkoordiniert betrieben werden. Für den Anwendungsfall der schnurlosen Telefonie können dabei das Telekommunikationsnetz 5, die Basisstationen 11, 12 und die Mobilstationen 21, 22 beispielsweise gemäß dem DECT-Standard (Digital European Cordless Telecommunications) ausgebildet sein. In einem solchen unkoordinierten Betrieb ist eine Codezuweisung für die einzelnen einzurichtenden Verbindungen zwischen den Basisstationen 11, 12 und den Mobilstationen 21, 22 nicht mehr koordiniert möglich.

Im folgenden soll nun beispielhaft die zwischen der ersten Basisstation 11 und der ersten Mobilstation 21 einzurichtende erste Verbindung 41 beschrieben werden. Beim Verbindungsaufbau wird dabei entweder in der ersten Basisstation 11 oder in der ersten Mobilstation 21 durch die Mittel 30 zur Codemessung überprüft, welche Codes C in welchen Zeitschlitzen ZS bereits durch andere Verbindungen belegt sind. Hierzu muß das in der ersten Basisstation 11 bzw. in der ersten Mobilstation 21 empfangene Signal für jeden der fünfzehn Zeitschlitze ZS mit jedem der im ersten Codespeicher 51 gespeicherten zugelassenen Codes C entspreizt werden, was einer Demodulation im CDMA-Verfahren entspricht. Durch die Entspreizung in den Mitteln 30 zur Codemessung werden auf diese Weise sämtliche Übertragungskanäle 1, die jeweils als Code/Zeitschlitz-Kombination ausgebildet sind, aus dem Empfangssignal extrahiert. Dabei handelt es sich gemäß Figur 2 um sechzig Übertragungskanäle, die sich aus der Multiplikation von fünfzehn Zeitschlitzen ZS mit vier Codes C ergeben. Die auf diese Weise extrahierten Übertragungskanäle 1 werden dann den Mitteln 10 zur Kanalmessung zugeführt, die die Übertragungsleistung auf allen extrahierten Übertragungskanälen 1 messen. Der einzurichtenden ersten Verbindung 41 wird dann durch die Mittel 20 zur Kanalzuweisung mindestens einer der Übertragungskanäle 1 zugewiesen. Dabei wird derjenige Übertragungskanal der ersten Verbindung 1 zugewiesen, dessen zuvor gemessene Übertragungsleistung minimal ist. Für eine einzurichtende Vollduplexverbindung zwischen der ersten Basisstation 11 und der ersten Mobilstation 21 ist das beschriebene Verfahren sowohl für die Uplink-Übertragungsrichtung von der ersten Mobilstation 21 zur ersten Basisstation 11 als auch für die Downlink-Übertragungsrichtung von der ersten Basisstation 11 zur ersten Mobilstation 21 durchzuführen, so daß in jeder der beiden Übertragungsrichtungen mindestens ein Übertragungskanal für die erste Verbindung 41 genutzt werden kann. In Figur 3 ist sowohl für die erste Verbindung 41 als auch für die zweite Verbindung 42 durch die Pfeildarstellung jeweils stellvertretend die Downlink-Übertragungsrichtung dargestellt. Im folgenden wird wieder die erste Verbindung 41 betrachtet. Dabei kann es vorgesehen sein, daß die Kanalmessung für die Zuweisung mindestens eines der Übertragungskanäle 1 in der Uplink-Übertragungsrichtung von der ersten Basisstation 11 und die Kanalmessung für die Zuweisung mindestens eines der Übertragungskanäle 1 in der Downlink-Übertragungsrichtung von der ersten Mobilstation 21 durchgeführt wird. Die Zuweisung des durch die Kanalmessung ausgewählten mindestens einen der Übertragungskanäle 1 in der Uplink-Übertragungsrichtung kann dann von der ersten Basisstation 11 durchgeführt werden. Die Zuweisung erfolgt dabei durch ihre Mittel 20 zur Kanalzuweisung, die über die Sendevorrichtung 35 der ersten Basisstation 11 eine entsprechende Signalisierung bezüglich des mindestens einen zugewiesenen Übertragungskanal an die erste Mobilstation 21 überträgt. In entsprechender Weise kann die Zuweisung mindestens eines der Übertragungskanäle 1 in der Downlink-Übertragungsrichtung von der ersten Mobilstation 21 durchgeführt werden, deren Mittel 20 zur Kanalzuweisung in diesem Fall eine Signalisierung über die entsprechende Sendevorrichtung 35 an die erste Basisstation 11 übertragen, um den mindestens einen für die Downlink-Übertragungsrichtung ausgewählten Übertragungskanal in der ersten Basisstation 11 bekannt zu machen.

Gemäß dem hier beschriebenen Ausführungsbeispiel wird dabei für die Downlink-Übertragungsrichtung der ersten Verbindung 41 ein erster Übertragungskanal 31 zugewiesen, der eine Kombination aus dem dritten Zeitschlitz und dem zweiten Code gemäß dem Code/Zeitschlitz-Diagramm in Figur 2 darstellt.

Vor Aufbau der ersten Verbindung 41 wählt die erste Basisstation 11 initial einen der Übertragungskanäle 1 aus und benutzt ihn als sogenannten Broadcast-Kanal. Gemäß dem hier beschriebenen Ausführungsbeispiel wählt die erste Basisstation 1 eine Kombination aus erstem Zeitschlitz und drittem Code als Broadcast-Kanal 50 gemäß dem Code/Zeitschlitz-Diagramm in Figur 2 aus. Über den Broadcast-Kanal 50 werden die für die erste Basisstation 11 spezifischen Informationen an alle in der ersten Funkzelle 61 befindlichen Mobilstationen übertragen. Diese spezifischen Informationen beinhalten beispielsweise die von der ersten Basisstation 11 verwendeten Codes, eine Identifikation der ersten Basisstation 11, Synchronisationsinformationen, Angaben über bereits verwendete Übertragungskanäle bzw. Code/ZeitschlitzKombinationen, Informationen über Paging-Nachrichten, die für eine oder mehrere in der ersten Funkzelle 61 angeordnete Mobilstationen vorliegen, usw. Die in der ersten Funkzelle 61 angeordnete erste Mobilstation 21 erkennt also die ihr zugeordnete erste Basisstation 11 durch Aufsynchronisieren auf den Broadcast-Kanal 50 und Auswertung der über diesen Broadcast-Kanal 50 übertragenen Informationen.

Als Broadcast-Kanal 50 kann prinzipiell jeder der Übertragungskanäle 1 verwendet werden. Um Störungen der Broadcast-Kanäle unterschiedlicher Basisstationen 11, 12 zu vermeiden, gibt es die Möglichkeit, bei Bedarf den Broadcast-Kanal zu wechseln. Dabei kann es vorgesehen sein, daß der Broadcast-Kanal gewechselt wird, wenn die auf ihm detektierten Störungen durch andere Broadcast-Kanäle oder sonstige Übertragungskanäle einen vorgegebenen Wert überschreiten. Damit der Aufwand der in diesem Beispiel beschriebenen ersten Mobilstation 21 beim Finden des Broadcast-Kanals 50 reduziert wird, kann dem Broadcast-Kanal der ersten Basisstation 11 entweder ein spezieller Code C bei beliebigem Zeitschlitz ZS oder ein bestimmter Zeitschlitz ZS bei beliebigem Code C reserviert bzw. vorgegeben werden. Als dritte Möglichkeit bietet sich auch eine vorreservierte Auswahl beliebig festgelegter Übertragungskanäle bzw. Code/Zeitschlitz-Kombinationen zur Verwendung als Broadcast-Kanal 50 an.

Während der bestehenden ersten Verbindung 41 wird die Übertragungsleistung auf allen möglichen Übertragungskanälen 1 in der beschriebenen Weise zyklisch weitergemessen, so daß ständig ein Bild von freien und belegten bzw. von gestörten und ungestörten Übertragungskanälen zur Verfügung steht. Parallel dazu wird durch die Mittel 40 zur Messung der Verbindungsqualität in der ersten Basisstation 11 und/oder in der ersten Mobilstation 21 die Verbindungsqualität der bestehenden ersten Verbindung 41 gemessen, beispielsweise anhand der Übertragungsfehlerrate. Beim Unterschreiten einer vorgegebenen Verbindungsqualität wird dann ein Kanalwechsel auf einen anderen Übertragungskanal bzw. eine andere Code/Zeitschlitz-Kombination durchgeführt. Dazu müssen, wie beschrieben, ständig die Übertragungsleistungen der bislang nicht für die erste Verbindung 41 verwendeten Übertragungskanäle bzw. Code/Zeitschlitz-Kombinationen überwacht werden. Für den Kanalwechsel mißt dabei die erste Basisstation 11 die Verbindungsqualität der ersten Verbindung 41 in Uplink-Übertragungsrichtung und die erste Mobilstation 21 die entsprechende Verbindungsqualität der ersten Verbindung 41 in Downlink-Übertragungsrichtung. Bei Unterschreiten einer vorgegebenen Schwelle der Verbindungsqualität erfolgt der Kanalwechsel in Uplink- und Downlink-Übertragungsrichtung unabhängig voneinander. Dazu sind wie auch für den Verbindungsaufbau drei Konzepte möglich. Bei einem ersten Konzept erfolgt der Kanalwechsel allein durch die Basisstation 11, da sie bereits alle von ihr verwendeten Übertragungskanäle kennt. Die erste Mobilstation 21 übermittelt dazu über ihre Sendevorrichtung 35 die Meßergebnisse der Verbindungsqualität oder die Anforderung eines Kanalwechsels aufgrund solcher Meßergebnisse für die Downlink-Übertragungsrichtung an die erste Basisstation 11. Beim zweiten Konzept initiiert die erste Mobilstation 21 den Kanalwechsel in Downlink-Übertragungsrichtung und die erste Basisstation 11 den Kanalwechsel in Uplink-Übertragungsrichtung. Das dritte Konzept orientiert sich am DECT-Standard, bei dem der Kanalwechsel sowohl in Uplink- als auch in Downlink-Übertragungsrichtung von der ersten Mobilstation 21 initiiert wird und die erste Basisstation 11 der ersten Mobilstation 21 lediglich signalisiert, daß in Uplink-Übertragungsrichtung ein Kanalwechsel notwendig ist. Unabhängig davon, ob die Verbindungsqualität in der ersten Basisstation 11 oder in der ersten Mobilstation 21 gemessen wird, erfolgt diese Messung dadurch, daß aus dem über die entsprechende Empfangsvorrichtung 25 empfangenen Signal durch die jeweilige Entspreizvorrichtung 45 mit Hilfe des oder der im zweiten Codespeicher 52 gespeicherten Codes, die der ersten Verbindung 41 zugeordnet sind, die auszuwertenden Übertragungskanäle für die erste Verbindung 41 extrahiert und den Mitteln 40 zur Messung der Verbindungsqualität zugeführt werden. In den Mitteln 40 zur Messung der Verbindungsqualität wird dann die Verbindungsqualität der Übertragungskanäle für die erste Verbindung 41 beispielsweise anhand der Übertragungsfehlerrate gemessen. Parallel dazu extrahieren die Mittel 30 zur Codemessung sämtliche Übertragungskanäle 1 aus dem über die Empfangsvorrichtung 25 empfangenen Signal mit Hilfe der im ersten Codespeicher 51 gespeicherten Codes und führt diese Übertragungskanäle der Kanalmessung in den ersten Mitteln 10 zur Kanalmessung zu, die die Übertragungsleistung auf den extrahierten Übertragungskanälen 1 messen. Die Mittel 10 zur Kanalmessung prüfen nun anhand des von den Mitteln 40 zur Messung der Verbindungsqualität ermittelten Wertes der Verbindungsqualität des jeweiligen Übertragungskanals der ersten Verbindung 41, ob dieser Wert einen vorgegebenen Wert für die Verbindungsqualität unterschreitet. Ist dies der Fall, so wählen die Mittel 10 zur Kanalmessung denjenigen Übertragungskanal aus, der minimale Übertragungsleistung aufweist und veranlassen die Mittel 20 zur Kanalzuweisung dazu, diesen Übertragungskanal im folgenden für die erste Verbindung 41 anstelle des durch die Mittel 40 zur Messung der Verbindungsqualität gemessenen entsprechenden Übertragungskanals mit zu geringer Verbindungsqualität zu verwenden.

Gemäß Figur 3 ist ein Szenario dargestellt, bei dem die erste Basisstation 11 und die zweite Basisstation 12 unabhängig voneinander betrieben werden. In beiden Basisstationen 11, 12 ist jeweils eine Mobilstation 21, 22 angemeldet. Die erste Mobilstation 21 befindet sich zunächst an einer in Figur 3 dargestellten ersten Position A innerhalb der ersten Funkzelle 61 und weist eine erste Sende-/Empfangsreichweite 71 auf. Die zweite Mobilstation 22 befindet sich in der zweiten Funkzelle 62 an einer dritten Position C und umfaßt eine zweite Sende-/Empfangsreichweite 72. Die erste Mobilstation 21 kann dabei Funksignale innerhalb der ersten Sende-/Empfangsreichweite 71 senden und empfangen. Außerhalb dieser ersten Sende-/Empfangsreichweite 71 gesendete Signale werden von der ersten Mobilstation 21 nicht mehr empfangen. Außerdem können außerhalb der ersten Sende-/Empfangsreichweite 71 von der ersten Mobilstation 21 gesendete Signale nicht mehr in der zweiten Basisstation 12 und in der zweiten Mobilstation 22 empfangen werden. Entsprechendes gilt für die zweite Sende-/Empfangsreichweite 72 der zweiten Mobilstation 22. Sowohl für die erste Verbindung 41 als auch für die zweite Verbindung 42 werden dabei gleichzeitig die gleichen Übertragungskanäle bzw. Code/Zeitschlitz-Kombinationen in der Uplink- und in der Downlink-Übertragungsrichtung verwendet. Für die Downlink-Übertragungsrichtung wird dabei gemäß Figur 2 und Figur 3 der erste Übertragungskanal 31 sowohl für die erste Verbindung 41 als auch für die zweite Verbindung 42 verwendet. Der nachfolgend erläuterte Fall des Kanalwechsels gilt sowohl für die Uplink- als auch für die Downlink-Übertragungsrichtung, wobei beide unabhängig voneinander sind. Die beiden Mobilstationen 21, 22 sind ausreichend voneinander entfernt, so daß ihre Sende-/Empfangsreichweiten 71, 72 nicht überlappen und sie sich nicht gegenseitig in ihren Übertragungskanälen stören. Für beide Verbindungen 41, 42 wird in der beschriebenen Weise die aktuelle Verbindungsqualität gemessen, sowohl in Uplink- als auch in Downlink-Übertragungsrichtung beispielsweise durch Auswertung der Übertragungs- oder Bitfehlerrate. Beide Mobilstationen 21, 22 ermitteln zyklisch die Übertragungsleistung aller möglichen Übertragungskanäle 1 bzw. Code/Zeitschlitz-Kombinationen, indem sie in der beschriebenen Weise durch die Mittel 30 zur Codemessung alle Übertragungskanäle 1 bzw. Code/Zeitschlitz-Kombinationen entspreizen und die Übertragungsleistung der auf diese Weise extrahierten Übertragungskanäle 1 durch die Mittel 10 zur Kanalmessung ermitteln und in Tabellenform in einem in Figur 1 nicht dargestellten Speicher ablegen. Kleinere Werte der gemessenen Übertragungsleistung signalisieren dabei keine oder nur wenig Störung. Bewegt sich nun die erste Mobilstation 21 von der ersten Position A in eine zweite Position B und damit gemäß Figur 3 in die zweite Funkzelle 62 bzw. in die zweite Sende-/Empfangsreichweite 72 der zweiten Mobilstation 22, so nehmen die gegenseitigen Störungen der verwendeten Übertragungskanäle zu und die Verbindungsqualität nimmt somit ab. Unterschreitet sie den vorgegebenen Wert für die Verbindungsqualität, so wird in der beschriebenen Weise zumindest für eine der beiden Verbindungen 41, 42 ein Kanalwechsel eingeleitet und dieser Verbindung in Uplink- und/oder in Downlinkübertragungssrichtung mindestens ein neuer Übertragungskanal zugewiesen.

In Abwandlung von Figur 2 könnte es auch vorgesehen sein, einzelne Zeitschlitze ZS durch mehr oder weniger als vier Codes C zu entspreizen.

Gemäß dem hier beschriebenen Ausführungsbeispiel werden jedoch sämtliche fünfzehn Zeitschlitze ZS pro Übertragungsrahmen mit vier Codes C gespreizt, so daß sich insgesamt 60 Übertragungskanäle ergeben. Gemäß dem beschriebenen Ausführungsbeispiel könnte dann sowohl die erste Basisstation 11 als auch die zweite Basisstation 12 auf jeweils 60 solcher Übertragungskanäle im störungsfreien Fall zugreifen, so daß insgesamt 60 Verbindungen gleichzeitig innerhalb des durch die erste Funkzelle 61 und durch die zweite Funkzelle 62 definierten geographischen Bereichs theoretisch durchgeführt werden können, wenn die Reservierung von Übertragungskanälen für die Einrichtung jeweils eines Broadcast-Kanals für die beiden Basisstationen 11, 12 außer Acht gelassen wird.

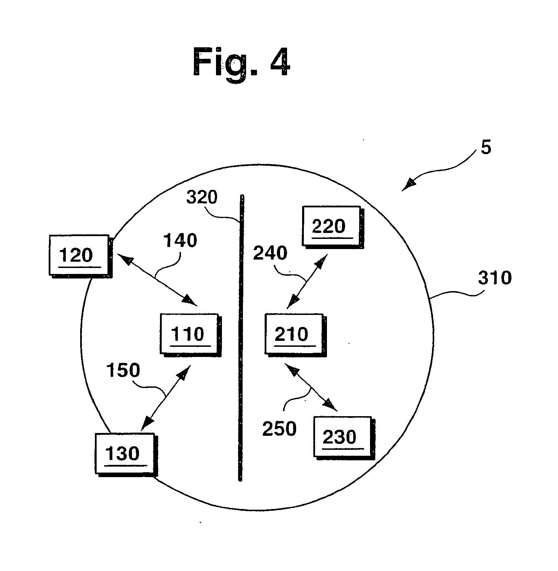

In Figur 4 ist ein weiteres Ausführungsbeispiel dargestellt. Dabei kennzeichnet 310 ein Funkversorgungsgebiet, beispielsweise eine gemeinsame Funkzelle, in dem bzw. in der eine dritte Basisstation 110 und eine vierte Basisstation 210 unabhängig voneinander und unkoordiniert betrieben werden. Dabei soll beispielhaft und wie beschrieben von einem TDD-Betrieb unter Verwendung eines CDMA-Verfahrens ausgegangen werden. Das Telekommunikationsnetz 5 kann dabei wiederum als Mobilfunknetz oder als Schnurlostelefonnetz wie beschrieben ausgebildet sein.

Die dritte Basisstation 110 und die vierte Basisstation 210 sind dabei lokal direkt benachbart angeordnet und lediglich durch eine Wand 320 voneinander getrennt, die jedoch für die zur Übertragung verwendeten Funkfrequenzen kein Hindernis darstellt und andeuten soll, daß die beiden Basisstationen 110, 210 beispielsweise in benachbarten Büroräumen angeordnet sind. Die dritte Basisstation 110 versorgt über eine dritte Verbindung 140 eine dritte Mobilstation 120 und über eine vierte Verbindung 150 eine vierte Mobilstation 130. Die dritte Verbindung 140 und die vierte Verbindung 150 stellen dabei in diesem Beispiel wie beschrieben Funkverbindungen im TDD-Modus dar. Dabei soll beispielhaft davon ausgegangen werden, daß die dritte Verbindung 140 und die vierte Verbindung 150 zusammen eine so hohe Datenrate benötigen, daß sämtliche zur Verfügung stehende Übertragungskanäle des TDD-Modus benutzt werden. Die vierte Basisstation 210 möchte nun eine fünfte Verbindung 240 im TDD-Modus unter Verwendung des CDMA-Verfahrens zu einer fünften Mobilstation 220 aufbauen. Dazu werden wie beim Ausführungsbeispiel nach Figur 3 alle im Funkversorgungsgebiet 310 verfügbaren Übertragungskanäle, das heißt Code-/Zeitschlitzkombinationen daraufhin geprüft, ob sie entweder schon belegt sind oder ob sie Störungen aufweisen, die den vorgegebenen Wert für die Verbindungsqualität unterschreiten. Ist dies der Fall, so ist der entsprechende Übertragungskanal unbrauchbar, andernfalls ist er brauchbar. Sind alle Übertragungskanäle im Funkversorgungsgebiet 310 unbrauchbar oder ist die Zahl der noch zur Verfügung stehenden brauchbaren Übertragungskanäle für die fünfte Verbindung 240 kleiner als die Zahl der für die fünfte Verbindung 240 benötigten Übertragungskanäle, so erkennt dies die vierte Basisstation 210.

Um dennoch die fünfte Verbindung 240 aufbauen zu können, ohne inakzeptable Störungen für die bereits bestehende dritte Verbindung 140 und die bereits bestehende vierte Verbindung 150 zu erzeugen, ändert die vierte Basisstation 210 einen von ihr und der dritten Basisstation 110 gemeinsam benutzten Scrambling-Code.

In der Regel wird innerhalb einer Funkzelle ein einziger Scrambling-Code verwendet. Sämtliche Signale, die in der Funkzelle übertragen werden, werden dabei mit diesem Scrambling-Code verwürfelt. Damit sich Signale unterschiedlicher benachbarter Funkzellen, insbesondere bei Verwendung eines CDMA-Verfahrens, nicht gegenseitig stören, werden sie mit unterschiedlichen Scrambling-Codes verwürfelt, das heißt, benachbarte Funkzellen benutzen unterschiedliche Scrambling-Codes. Die verschiedenen Scrambling-Codes sind dabei so gewählt, daß sie eine möglichst geringe Kreuzkorrelation untereinander bei beliebigen gegenseitigen Zeitverschiebungen aufweisen. Die Spreizung der Signale innerhalb einer Funkzelle erfolgt dann mit Hilfe orthogonaler Codes, die aufgrund der zeitsynchronen Versendung gegenseitig unkorreliert sind.

Dieses Konzept wird nun im beschriebenen Falle unzureichender Übertragungskapazität verlassen, indem im Funkversorgungsgebiet 310, das ja in diesem Beispiel eine gemeinsame Funkzelle darstellen soll, für die vierte Basisstation 210 ein vom Scrambling-Code der dritten Basisstation 110 verschiedener Scrambling-Code eingeführt wird.

Anschließend wiederholt sich die bereits im Ausführungsbeispiel anhand der Figuren 1 bis 3 beschriebene Suche nach und gegebenenfalls Zuweisung von ausreichend störungsfreien Übertragungskanälen für die aufzubauende fünfte Verbindung 240, jedoch unter Verwendung des neuen Scrambling-Codes.

Diese Prozedur wird solange wiederholt, bis eine ausreichende Anzahl ausreichend störungsfreier Übertragungskanäle gefunden und der fünften Verbindung 240 zugewiesen wurde.

Werden nicht genügend ausreichend störungsfreie Übertragungskanäle gefunden, so kann ein weiterer Scrambling-Code in der beschriebenen Weise geprüft und gegebenenfalls verwendet werden. Diese Prozedur kann solange wiederholt werden, bis ein "unbenutzter" Scrambling-Code mit genügend ausreichend störungsfreien Übertragungskanälen gefunden wird.

Ausgehend von dem beschriebenen Szenario soll nun gemäß Figur 4 eine sechste Verbindung 250 im TDD-Modus unter Verwendung des CDMA-Verfahrens von der vierten Basisstation 210 zu einer sechsten Mobilstation 230 aufgebaut werden. Die fünfte Verbindung 240 soll dabei eine so hohe Datenrate benötigen, daß für die sechste Verbindung 250 auch bei Verwürfelung mit dem neuen Scrambling-Code nicht genügend Übertragungskanäle zur Verfügung stehen, weil beispielsweise sämtliche Übertragungskanäle mit dem neuen Scrambling-Code von der fünften Verbindung 240 benutzt werden. Der neue Scrambling-Code wird im folgenden als erster neuer Scrambling-Code bezeichnet.

Für die sechste Verbindung 250 kann nun die vierte Basisstation 210 einen zweiten neuen Scrambling-Code einführen, der sich vom ersten neuen Scrambling-Code und dem gegebenenfalls ursprünglich von der vierten Basisstation 210 benutzten Scrambling-Code unterscheidet, wobei sämtliche verwendeten Scrambling-Codes die beschriebene Eigenschaft der geringen gegenseitigen Kreuzkorrelation bei beliebiger gegenseitiger Zeitverschiebung aufweisen sollen.

In der zuvor insbesondere für das Ausführungsbeispiel nach den Figuren 1 bis 3 beschriebenen Weise erfolgt dann wiederum eine Suche nach und gegebenenfalls Zuweisung von ausreichend störungsfreien Übertragungskanälen für die aufzubauende sechste Verbindung 240, jedoch unter Verwendung des zweiten neuen Scrambling-Codes.

Diese Prozedur wird ebenfalls solange wiederholt, bis eine ausreichende Anzahl ausreichend störungsfreier Übertragungskanäle gefunden und der sechsten Verbindung 240 zugewiesen wurde.

Werden nicht genügend ausreichend störungsfreie Übertragungskanäle gefunden, so kann ein weiterer Scrambling-Code in der beschriebenen Weise geprüft und gegebenenfalls verwendet werden. Diese Prozedur kann solange wiederholt werden, bis ein "unbenutzter" Scrambling-Code mit genügend ausreichend störungsfreien Übertragungskanälen gefunden wird.

Für eine aufzubauende Verbindung zwischen einer der Basisstationen 110, 210 und einer der Mobilstationen 120, 130, 220, 230 können auch verschiedene Scrambling-Codes Verwendung finden, falls dies die für diese Verbindung benötigte Datenrate und die zur Verfügung stehenden ausreichend störungsfreien Übertragungskanäle erfordern.

Wenn im beschriebenen unkoordinierten Betrieb also festgestellt wird, daß die Verbindungsqualität aller oder vieler Übertragungskanäle beispielsweise durch Störungen schlechter wird, so kann wie beschrieben versucht werden, den Einfluß der Störungen durch Ausweichen auf andere Scrambling-Codes zu reduzieren.

Das Verwenden von unterschiedlichen Scrambling-Codes kann dabei dazu führen, daß die Übertragungskapazität des lokal begrenzten Telekommunikationsnetzes 5 im unkoordinierten Betrieb um ein Vielfaches über dem im koordinierten Betrieb liegt.

Bei der Suche nach bislang unbenutzten Scrambling-Codes kann entweder nach einer festgelegten Reihenfolge vorgegangen werden oder sie erfolgt jeweils durch zufällige Auswahl eines Scrambling-Codes.

Die dritte Basisstation 110, die vierte Basisstation 210, die dritte Mobilstation 120, die vierte Mobilstation 130, die fünfte Mobilstation 220 und die sechste Mobilstation 230 sollen dabei jeweils den beschriebenen Aufbau und die beschriebene Funktionsweise der Teilnehmerstation 15 gemäß Figur 1 aufweisen. Dabei können die Mittel 10 zur Kanalmessung den oder die neuen Scrambling-Codes erzeugen, und eine entsprechende Verwürfelung der zu messenden Übertragungskanäle durchführen.

Die Messung und Zuweisung derart verwürfelter Übertragungskanäle und damit auch der Wechsel des Scrambling-Codes kann dabei sowohl in den Basisstationen 11, 12, 110, 210, beispielsweise für die Uplink - Übertragungsrichtung, als auch in den Mobilstationen 21, 22, 120, 130, 220, 230, beispielsweise für die Downlink - Übertragungsrichtung, erfolgen.

Die Suche nach neuen Scrambling-Codes kann permanent oder bei Bedarf erfolgen.

## Patentansprüche

1. Verfahren zur Erweiterung der Übertragungskapazität in einem Telekommunikationsnetz (5) mit mehreren Basisstationen (110, 210) und Mobilstationen (120, 130, 220, 230), wobei Übertragungskanäle (140, 150, 240, 250) zur Übertragung von Signalen zwischen den Basisstationen (110, 210) und den Mobilstationen (120, 130, 220, 230) vorgesehen sind, wobei die Übertragungskanäle (140, 150, 240, 250) mit einem Scrambling Code verwürfelt sind, **dadurch gekennzeichnet, dass** in einem unkoordinierten Betrieb der Basisstationen (110, 210) für den Fall, dass die Übertragungskapazität der ermittelten Übertragungskanäle (140, 150, 240, 250) nicht ausreicht, mindestens ein mit einem zweiten Scrambling Code verwürfelter Übertragungskanal (140, 150, 240, 250) für die Übertragung der Signale zwischen den Basisstationen (110, 210) und den Mobilstationen (120, 130, 220, 230) zugewiesen wird, dass die Zuweisung des Übertragungskanals (140, 150, 240, 250) in Abhängigkeit einer Kanalmessung erfolgt, bei der die Übertragungsleistung aller möglicher Übertragungskanäle (140, 150, 240, 250) nach Verwürfelung mit dem zweiten Scrambling Code gemessen wird, dessen gemessene Übertragungsleistung minimal ist.

2. Verfahren nach Anspruch 1, **dadurch gekennzeichnet, dass** Codes (C) vorgesehen sind, durch die mindestens eine Übertragungsressource, insbesondere ein Zeitschlitz (ZS) oder ein Frequenzband, in mehrere der Übertragungskanäle (140, 150, 240, 250) zur Übertragung von Signalen zwischen den Basisstationen (110, 210) und den Mobilstationen (120, 130, 220, 230) gespreizt wird und dass die Kanalmessung eine Codemessung umfasst, bei der ein empfangenes Signal für jede Übertragungsressource mit jedem zugelassenen Code (C) entspreizt wird, um die Übertragungsleistung in jedem der Übertragungskanäle (1) zu messen.

3. Verfahren nach Anspruch 1 oder 2, **dadurch gekennzeichnet, dass** die Kanalmessung für die Zuweisung mindestens eines der Übertragungskanäle (1) zwischen einer der Basisstationen (110, 210) und einer der Mobilstationen (120, 130, 220, 230) bei einem Verbindungsaufbau durchgeführt wird.

4. Verfahren nach Anspruch 1, 2 oder 3, **dadurch gekennzeichnet, dass** die Kanalmessung für die Zuweisung mindestens eines der Übertragungskanäle (1) während einer bestehenden Verbindung (140, 150, 240, 250) zwischen einer der Basisstationen (110, 210) und einer der Mobilstationen (120, 130, 220, 230) durchgeführt wird, dass parallel die Verbindungsqualität der bestehenden Verbindung (140, 150, 240, 250) gemessen wird und dass bei Unterschreiten eines vorgegebenen Wertes für die Verbindungsqualität ein Kanalwechsel durchgeführt und mindestens ein neuer Übertragungskanal (32) in Abhängigkeit der Kanalmessung der bestehenden Verbindung (140, 150, 240, 250) zugewiesen wird.

5. Verfahren nach einem der vorherigen Ansprüche, **dadurch gekennzeichnet, dass** die Kanalmessung für die Zuweisung mindestens eines der Übertragungskanäle (1) in einer Uplink-Übertragungsrichtung von einer der Mobilstationen (120, 130, 220, 230) zu einer der Basisstationen (110, 210) von der entsprechenden Basisstation (110, 210) und dass die Kanalmessung für die Zuweisung mindestens eines der Übertragungskanäle (1) in einer Downlink-Übertragungsrichtung von einer der Basisstationen (110, 210) zu einer der Mobilstationen (120, 130, 220, 230) von der entsprechenden Mobilstation (120, 130, 220, 230) durchgeführt wird.

6. Verfahren nach einem der vorherigen Ansprüche, **dadurch gekennzeichnet, dass** die Zuweisung mindestens eines der Übertragungskanäle (1) zumindest in einer Uplink-Übertragungsrichtung von einer der Mobilstationen (120, 130, 220, 230) zu einer der Basisstationen (110, 210) von der entsprechenden Basisstation (110, 210) durchgeführt wird.

7. Verfahren nach einem der vorherigen Ansprüche, **dadurch gekennzeichnet, dass** die Zuweisung mindestens eines der Übertragungskanäle (1) zumindest in einer Downlink-Übertragungsrichtung von einer der Basisstationen (110, 210) zu einer der Mobilstationen (120, 130, 220, 230) von der entsprechenden Mobilstation (120, 130, 220, 230) durchgeführt wird.

8. Verfahren nach einem der vorherigen Ansprüche, **dadurch gekennzeichnet, dass** für mindestens eine der Basisstationen (110, 210) spezifische Informationen über einen Broadcast-Kanal (50) an alle im Empfangsbereich dieser mindestens einen Basisstation (110,210) liegenden Mobilstationen (21; 22) übertragen werden und dass der Broadcast-Kanal (50) gewechselt wird, wenn die auf ihm detektierten Störungen einen vorgegebenen Wert überschreiten.

9. Verfahren nach Anspruch 8, **dadurch gekennzeichnet, dass** mindestens einer der Übertragungskanäle (1) für die Verwendung als Broadcast-Kanal (50) reserviert wird.

10. Teilnehmerstation (110, 210; 120, 130, 220, 230), insbesondere Basisstation (110, 210) oder Mobilstation (120, 130, 220, 230), eines Telekommunikationsnetzes (5) mit mehreren Basisstationen (110, 210) und Mobilstationen (120, 130, 220, 230), wobei Übertragungskanäle (1) zur Übertragung von Signalen zwischen den Basisstationen (110, 210) und den Mobilstationen (120, 130, 220, 230) vorgesehen sind, wobei die Übertragungskanäle (140, 150, 240, 250) mit einem ersten Scrambling Code verwürfelt sind, **dadurch gekennzeichnet, dass** Mittel (10) zur Erweiterung der Übertragungskapazität vorgesehen sind, die in einem unkoordinierten Betrieb der Basisstationen (110, 210) des Telekommunikationsnetzes (5) für den Fall, dass die Übertragungskapazität der ermittelten Übertragungskanäle (140, 150, 240, 250) nicht ausreicht, mindestens einen mit einem zweiten Scrambling-Code verwürfelten Übertragungskanal (140, 150, 240, 250) für die Übertragung der Signale zwischen den Basisstationen (110, 210) und den Mobilstationen (120, 130, 220, 230) bereitstellen, dass Mittel (20) zur Zuweisung eines Übertragungskanals (140, 150, 240, 250) vorgesehen sind, die in Abhängigkeit einer Kanalmessung, erfolgt, bei der die Übertragungsleistung aller möglicher Übertragungskanäle (140, 150, 240, 250) nach Verwürfelung mit dem zweiten Scrambling-Code gemessen wird, und den Übertragungskanal (140, 150, 240, 250) auswählt, dessen gemessene Übertragungsleistung minimal ist.

11. Teilnehmerstation(110, 210; 120, 130, 220, 230), nach Anspruch 10, **dadurch gekennzeichnet, dass** Codes (C) vorgesehen sind, durch die mindestens eine Übertragungsressource, insbesondere ein Zeitschlitz (SZ) oder ein Frequenzband, in mehrere der Übertragungskanäle (1) zur Übertragung von Signalen zwischen den Basisstationen (110, 210) und den Mobilstationen (120, 130, 220, 230) spreizbar sind, und dass die Teilnehmerstation (110, 210; 120, 130, 220, 230) Mittel (30) zur Codemessung umfasst, bei der ein in der Teilnehmerstation (110, 210; 120, 130, 220, 230) empfangenes Signal für jede Übertragungsressource mit jedem zugelassenen Code (C) entspreizt wird, um die Übertragungsleistung in jedem der Übertragungskanäle (1) zu messen.

12. Teilnehmerstation(110, 210; 120, 130, 220, 230) nach Anspruch 10 oder 11, **dadurch gekennzeichnet, dass** die Mittel (10) zur Kanalmessung die Kanalmessung für die Zuweisung des mindestens einen der Übertragungskanäle (1) zwischen der Teilnehmerstation (110, 210; 120, 130, 220, 230) und der weiteren Teilnehmerstation (110, 210; 120, 130, 220, 230) bei einem Verbindungsaufbau durchführen.

13. Teilnehmerstation (110, 210; 120, 130, 220, 230) nach Anspruch 10, 11 oder 12, **dadurch gekennzeichnet, dass** die Mittel (10) zur Kanalmessung die Kanalmessung für die Zuweisung des mindestens einen der Übertragungskanäle (1) während einer bestehenden Verbindung (140, 150, 240, 250) zwischen der Teilnehmerstation (110, 210; 120, 130, 220, 230) und der weiteren Teilnehmerstation (110, 210; 120, 130, 220, 230) durchführen, dass Mittel (40) zur Messung der Verbindungsqualität der bestehenden Verbindung (140, 150, 240, 250) vorgesehen sind, die parallel die Verbindungsqualität der bestehenden Verbindung (140, 150, 240, 250) messen und dass die Mittel (20) zur Kanalzuweisung bei Unterschreiten eines vorgegebenen Wertes für die Verbindungsqualität einen Kanalwechsel durchführen, so dass mindestens ein neuer Übertragungskanal (32) in Abhängigkeit der Kanalmessung der bestehenden Verbindung (140, 150, 240, 250) zugewiesen wird.

## Claims

1. Method for expanding the transmission capacity in a telecommunications network (5) having a plurality of base stations (110, 210) and mobile stations (120, 130, 220, 230), transmission channels (140, 150, 240, 250) being provided for the transmission of signals between the base stations (110, 210) and the mobile stations (120, 130, 220, 230), wherein the transmission channels (140, 150, 240, 250) are scrambled with a scrambling code, **characterized in that**, in an uncoordinated operating mode of the base stations (110, 210), if the transmission capacity of the transmission channels (140, 150, 240, 250) which are determined is not sufficient, at least one transmission channel (140, 150, 240, 250) which has been scrambled with a second scrambling code is assigned for the transmission of the signals between the base stations (110, 210) and the mobile stations (120, 130, 220, 230), **in that** the assignment of the transmission channel (140, 150, 240, 250) takes place as a function of a channel measurement in which the transmission power of all the possible transmission channels (140, 150, 240, 250) is measured after scrambling with the second scrambling code whose measured transmission power is minimal.

2. Method according to Claim 1, **characterized in that** codes (C) are provided by means of which at least one transmission resource, in particular a timeslot (ZS) or a frequency band is spread into a plurality of the transmission channels (140, 150, 240, 250) for the transmission of signals between the base stations (110, 210) and the mobile stations (120, 130, 220, 230), and **in that** the channel measurement comprises a code measurement in which a received signal is despread for each transmission resource with each permitted code (C) in order to measure the transmission power in each of the transmission channels (1).

3. Method according to Claim 1 or 2, **characterized in that** the channel measurement for the allocation of at least one of the transmission channels (1) between one of the base stations (110, 210) and one of the mobile stations (120, 130, 220, 230) is carried out during a connection setup.

4. Method according to Claim 1, 2 or 3, **characterized in that** the channel measurement for the allocation of at least one of the transmission channels (1) during an existing link (140, 150, 240, 250) is carried out between one of the base stations (110, 210) and one of the mobile stations (120, 130, 220, 230), **in that** the connection quality of the existing link (140, 150, 240, 250) is measured in parallel and **in that** when the connection quality drops below a predefined value for the connection quality, a channel change-over is carried out and at least one new transmission channel (32) is allocated to the existing link (140, 150, 240, 250) as a function of the channel measurement.

5. Method according to one of the preceding claims, **characterized in that** the channel measurement for the allocation of at least one of the transmission channels (1) in an uplink transmission direction from one of the mobile stations (120, 130, 220, 230) to one of the base stations (110, 210) is carried out by the corresponding base stations (110, 210) and **in that** the channel measurement for the allocation of at least one of the transmission channels (1) in a downlink transmission direction from one of the base stations (110, 210) to one of the mobile stations (120, 130, 220, 230) is carried out by the corresponding mobile station (120, 130, 220, 230).

6. Method according to one of the preceding claims, **characterized in that** the allocation of at least one of the transmission channels (1) in at least one uplink transmission direction from one of the mobile stations (120, 130, 220, 230) to one of the base stations (110, 210) is carried out by the corresponding base stations (110, 210).

7. Method according to one of the preceding claims, **characterized in that** the allocation of at least one of the transmission channels (1) at least in one downlink transmission direction from one of the base stations (110, 210) to one of the mobile stations (120, 130, 220, 230) is carried out by the corresponding mobile stations (120, 130, 220, 230).

8. Method according to one of the preceding claims, **characterized in that**, for at least one of the base stations (110, 210), specific information relating to a broadcast channel (50) is transmitted to all the mobile stations (21; 22) located in the reception range of this at least one base station (110, 210), and **in that** the broadcast channel (50) is changed if the faults detected on it exceed a predefined value.

9. Method according to Claim 8, **characterized in that** at least one of the transmission channels (1) is reserved for use as a broadcast channel (50).

10. Subscriber station (110, 210; 120, 130, 220, 230), in particular base station (110, 210) or mobile station (120, 130, 220, 230), of a telecommunications network (5) having a plurality of base stations (110, 210) and mobile stations (120, 130, 220, 230), transmission channels (1) being provided for the transmission of signals between the base stations (110, 210) and the mobile stations (120, 130, 220, 230), wherein the transmission channels (140, 150, 240, 250) are scrambled with a first scrambling code, **characterized in that** means (10) for extending the transmission capacity are provided, which, in an uncoordinated operating mode of the base stations (110, 210) of the telecommunication network (5), make available at least one transmission channel (140, 150, 240, 250), encrypted with a second scrambling code, for the transmission of the signals between the base stations (110, 210) and the mobile stations (120, 130, 220, 230), if the transmission capacity of the determined transmission channels (140, 150, 240, 250) is not sufficient, **in that** means (20) for assigning a transmission channel (140, 150, 240, 250) are provided, which assignment takes place as a function of a channel measurement in which the transmission power of all the possible transmission channels (140, 150, 240, 250) is measured after scrambling with the second scrambling code, and selects the transmission channel (140, 150, 240, 250) whose measured transmission power is minimal.

11. Subscriber station (110, 210; 120, 130, 220, 230) according to Claim 10, **characterized in that** codes (C) are provided by means of which at least one transmission resource, in particular a timeslot (SZ) or a frequency band, can be spread into a plurality of the transmission channels (1) for the transmission of signals between the base stations (110, 210) and the mobile stations (120, 130, 220, 230), and **in that** the subscriber station (110, 210; 120, 130, 220, 230) comprises means (30) for code measurement during which a signal received in the subscriber station (110, 210; 120, 130, 220, 230) is despread for each transmission resource with each permitted code (C) in order to measure the transmission power in each of the transmission channels (1).

12. Subscriber station (110, 210; 120, 130, 220, 230) according to Claim 10 or 11, **characterized in that** the means (10) for channel measurement carry out the channel measurement for the allocation of the at least one of the transmission channels (1) between the subscriber station (110, 210; 120, 130, 220, 230) and the further subscriber station (110, 210; 120, 130, 220, 230) during a connection setup.

13. Subscriber station (110, 210; 120, 130, 220, 230) according to Claim 10, 11 or 12, **characterized in that** the means (10) for channel measurement carry out the channel measurement for the allocation of the at least one of the transmission channels (1) during an existing link (140, 150, 240, 250) between the subscriber station (110, 210; 120, 130, 220, 230) and the further subscriber station (110, 210; 120, 130, 220, 230) **in that** means (40) for measuring the connection quality of the existing link (140, 150, 240, 250) are provided which measure in parallel the connection quality of the existing link (140, 150, 240, 250), and **in that** the means (20) for channel allocation carry out a channel change-over when the connection quality drops below a predefined value for the connection quality, with the result that at least one new transmission channel (32) is allocated to the existing link (140, 150, 240, 250) as a function of the channel measurement.

## Revendications

1. Procédé d'augmentation de la capacité de transmission dans un réseau de télécommunication (5) comprenant plusieurs stations de base (110, 210) et stations mobiles (120, 130, 220, 230), selon lequel des canaux de transmission (140, 150, 240, 250) sont prévus pour transmettre des signaux entre les stations de base (110, 210) et les stations mobiles (120, 130, 220, 230), les canaux de transmission (140, 150, 240, 250) étant brouillés avec un code de brouillage,
**caractérisé en ce qu'**
en fonctionnement non coordonné des stations de base (110, 210), au cas où la capacité de transmission des canaux de transmission déterminés (140, 150, 240, 250) n'est pas suffisante, au moins un canal de transmission (140, 150, 240, 250) brouillé avec un deuxième code de brouillage est affecté à la transmission des signaux entre les stations de base (110, 210) et les stations mobiles (120, 130, 220, 230), **en ce que** l'affectation du canal de transmission (140, 150, 240, 250) s'effectue en fonction d'une mesure de canaux, lors de laquelle la puissance de transmission de tous les canaux de transmission possibles (140, 150, 240, 250) est mesurée après le brouillage avec le deuxième code de brouillage, dont la puissance de transmission mesurée est minimale.

2. Procédé selon la revendication 1,
**caractérisé en ce que**
des codes (C) sont prévus, pour diviser au moins une ressource de transmission, en particulier un créneau de temps (ZS) ou une bande de fréquences, en plusieurs canaux de transmission (140, 150, 240, 250) pour la transmission de signaux entre les stations de base (110, 210) et les stations mobiles (120, 130, 220, 230), et la mesure de canaux comprend une mesure de codes lors de laquelle un signal reçu pour chaque ressource de transmission est reconstitué avec chaque code admis (C) pour mesurer la puissance de transmission dans chacun des canaux de transmission (1).

3. Procédé selon la revendication 1 ou 2,
**caractérisé en ce que**
la mesure de canaux pour l'affectation d'au moins l'un des canaux de transmission (1) entre l'une des stations de base (110, 210,) et l'une des stations mobiles (120, 130, 220, 230) est effectuée lors d'un établissement de communication.

4. Procédé selon la revendication 1, 2 ou 3, **caractérisé en ce que**
la mesure de canaux pour l'affectation d'au moins l'un des canaux de transmission (1) est effectuée pendant une communication établie (140, 150, 240, 250) entre l'une des stations de base (110, 210) et l'une des stations mobiles (120, 130, 220, 230), la qualité de communication de la communication établie (140, 150, 240, 250) est mesurée parallèlement, et si une valeur prédéterminée pour la qualité de communication n'est pas atteinte, un changement de canal est effectué et au moins un nouveau canal de transmission (32) est affecté à la communication établie (140, 150, 240, 250) en fonction de la mesure de canaux.

5. Procédé selon l'une quelconque des revendications précédentes,
**caractérisé en ce que**
la mesure de canaux pour l'affectation d'au moins l'un des canaux de transmission (1) est effectuée par la station de base (110, 210) correspondant dans une direction de transmission en liaison montante de l'une des stations mobiles (120, 130, 220, 230) vers l'une des stations de base (110, 210), et la mesure de canaux pour l'affectation d'au moins l'un des canaux de transmission (1) est effectuée par la station mobile (120, 130, 220, 230) correspondant dans une direction de transmission en liaison descendante de l'une des stations de base (110, 210) vers l'une des stations mobiles (120, 130, 220, 230).

6. Procédé selon l'une quelconque des revendications précédentes,
**caractérisé en ce que**
l'affectation d'au moins l'un des canaux de transmission (1) est effectuée par la station de base (110, 210) correspondant dans au moins une direction de transmission en liaison montante de l'une des stations mobiles (120, 130, 220, 230) vers l'une des stations de base (110, 210).

7. Procédé selon l'une quelconque des revendications précédentes,
**caractérisé en ce que**
l'affectation d'au moins l'un des canaux de transmission (1) est effectuée par la station mobile (120, 130, 220, 230) correspondante dans au moins une direction de transmission en liaison descendante de l'une des stations de base (110, 210) vers l'une des stations mobiles (120, 130, 220, 230).

8. Procédé selon l'une quelconque des revendications précédentes,
**caractérisé en ce que**
pour au moins l'une des stations de base (110, 210) des informations spécifiques sont transmises par un canal de diffusion (50) à toutes les stations mobiles (21 ; 22) situées dans la zone de réception de cette station de base (110, 210), et le canal de diffusion (50) est changé si les parasites détectés sur celui-ci dépassent une valeur prédéterminée.

9. Procédé selon la revendication 8,
**caractérisé en ce qu'**
au moins l'un des canaux de transmission (1) est réservé pour servir de canal de diffusion (50).

10. Station d'abonné (110, 210 ; 120, 130, 220, 230), en particulier station de base (110, 210) ou station mobile (120, 130, 220, 230), d'un réseau de télécommunication (5) comprenant plusieurs stations de base (110, 210) et stations mobiles (120, 130, 220, 230), avec des canaux de transmission (1) prévus pour la transmission de signaux entre les stations de base (110, 210) et les stations mobiles (120, 130, 220, 230), les canaux de transmission (140, 150, 240, 250) étant brouillés avec un premier code de brouillage, **caractérisée en ce que**
des moyens (10) pour augmenter la capacité de transmission sont prévus, lesquels, en fonctionnement non coordonné des stations de base (110, 210) du réseau de télécommunication (5), au cas où la capacité de transmission des canaux de transmission déterminés (140, 150, 240, 250) n'est pas suffisante, fournissent au moins un canal de transmission (140, 150, 240, 250) brouillé avec un deuxième code de brouillage pour la transmission des signaux entre les stations de base (110, 210) et les stations mobiles (120, 130, 220, 230), **en ce que** des moyens (20) sont prévus pour l'affectation d'un canal de transmission (140, 150, 240, 250), laquelle s'effectue en fonction d'une mesure de canaux, lors de laquelle la puissance de transmission de tous les canaux de transmission possibles (140, 150, 240, 250) est mesurée après le brouillage avec le deuxième code de brouillage, et sélectionne le canal de transmission (140, 150, 240, 250) dont la puissance de transmission mesurée est minimale.

11. Station d'abonné (110, 210 ; 120, 130, 220, 230) selon la revendication 10,
**caractérisée en ce que**
des codes (C) sont prévus, pour diviser au moins une ressource de transmission, en particulier un créneau de temps (SZ) ou une bande de fréquences, en plusieurs canaux de transmission (1) pour la transmission de signaux entre les stations de base (110, 210) et les stations mobiles (120, 130, 220, 230), et la station d'abonné (110, 210 ; 120, 130, 220, 230) comprend des moyens (30) pour la mesure de codes, lors de laquelle un signal reçu dans la station d'abonné (110, 210 ; 120, 130, 220, 230) pour chaque ressource de transmission est reconstitué avec chaque code admis (C) pour mesurer la puissance de transmission dans chacun des canaux de transmission (1).

12. Station d'abonné (110, 210 ; 120, 130, 220, 230) selon la revendication 10 ou 11,
**caractérisée en ce que**
les moyens (10) de mesure de canaux effectuent la mesure de canaux pour l'affectation d'au moins l'un des canaux de transmission (1) entre la station d'abonné (110, 210 ; 120, 130, 220, 230) et l'autre station d'abonné (110, 210 ; 120, 130, 220, 230) lors d'un établissement de communication.

13. Station d'abonné (110, 210 ; 120, 130, 220, 230) selon la revendication 10, 11 ou 12,
**caractérisée en ce que**
les moyens (10) de mesure de canaux effectuent la mesure de canaux pour l'affectation d'au moins l'un des canaux de transmission (1) pendant une communication (140, 150, 240, 250) établie entre la station d'abonné (110, 210 ; 120, 130, 220, 230) et l'autre station d'abonné (110, 210 ; 120, 130, 220, 230), et des moyens (40) sont prévus pour mesurer la qualité de communication de la communication établie (140, 150, 240, 250), qui mesurent parallèlement la qualité de communication de la communication établie (140, 150, 240, 250), et les moyens (20) d'affectation de canaux effectuent un changement de canal si une valeur prédéterminée pour la qualité de communication n'est pas atteinte, de sorte qu'au moins un nouveau canal de transmission (32) est affecté à la communication établie (140, 150, 240, 250) en fonction de la mesure de canaux.
